# EUROPEAN PATENT APPLICATION

(11) **EP 3 892 673 A1**
(43) Date of publication of application: **13.10.2021**
(21) Application number: 19892479.7
(22) Date of filing: 05.12.2019
(51) Int. Cl.: C08J 9/04, G10K 11/162, G10K 11/165

(54) **POROUS SOUND ABSORBING MATERIAL, METHOD FOR PRODUCING SAME AND SOUND ABSORPTION METHOD**

(30) Priority: 05.12.2018 JP 2018228423
(71) Applicant: Denka Company Limited, Tokyo 103-8338 (JP)
(72) Inventor: KANEKO, Erika, Ichihara-city, Chiba 2908588 (JP)
(74) Representative: Hoffmann Eitle
(86) International application number: PCT/JP2019/047682
(87) International publication number: WO 2020/116577

(57) **Abstract**

A porous sound absorbing material having an average cell size of 100 to 600 µm and an apparent density of 40 to 140 kg/m³. A sound absorption method using this porous sound absorbing material.

## Description

### Technical Field

The present invention relates to a porous sound absorbing material, a method for producing the same, and a sound absorption method.

### Background Art

Conventionally, as a sound absorbing material, a fibrous material such as glass wool, a foam material such as polystyrene foam, polyurethane foam, or polyethylene foam, and the like are used ("foam" is also referred to as "foamed product"). For example, as a sound absorbing material, it is known to use a propylene-based resin including a propylene-ethylene copolymer and having a melting start temperature within a range of 60°C to 100°C (see, for example, Patent Literature 1 below).

### Citation List

### Patent Literature

Patent Literature 1: Japanese Patent No. 5208818

### Summary of Invention

### Technical Problem

Incidentally, the audio-frequency range of a human is said to be usually from about 20 Hz to about 20000 Hz although varying between individuals. Further, in order to reduce unpleasant sound sensed by a human in buildings, various vehicles, aircrafts, and the like (particularly, so-called road noise entering into a vehicle interior during traveling), recently, sound in a low-frequency region (for example, a frequency of 1000 Hz or less) is demanded to be absorbed by a sound absorbing material. In order to enhance sound-absorption characteristics in a low-frequency region, it is effective to increase the thickness of the sound absorbing material or increase the weight of the sound absorbing material (increase the mass density of the sound absorbing material), but in these methods, there is a problem in that the use application and/or the location of use of the sound absorbing material is limited. Therefore, by improving sound-absorption characteristics, it is demanded for the sound absorbing material to maintain sufficient sound-absorption characteristics even in a case where the sound absorbing material is reduced in thickness or weight.

An object of an aspect of the present invention is to provide a porous sound absorbing material with which excellent sound-absorption characteristics in a low-frequency region can be obtained. Furthermore, an object of another aspect of the present invention is to provide a sound absorption method using this porous sound absorbing material. An object of still another aspect of the present invention is to provide a method for producing a porous sound absorbing material by which the above-described porous sound absorbing material can be obtained.

### Solution to Problem

An aspect of the present invention provides a porous sound absorbing material having an average cell size of 100 to 600 µm and an apparent density of 40 to 140 kg/m³. Another aspect of the present invention provides a sound absorption method of absorbing sound using this porous sound absorbing material. Still another aspect of the present invention provides a method for producing the aforementioned porous sound absorbing material, the method including foaming a foamable composition containing at least one selected from the group consisting of a resin material and an elastomer, and a foaming agent to obtain a foamed product, and then compressing the foamed product to communicate part or all of closed cells included in the foamed product, thereby obtaining open cells.

According to the porous sound absorbing material, the method for producing the same, and the sound absorption method mentioned above, excellent sound-absorption characteristics in a low-frequency region can be obtained. Furthermore, since excellent sound-absorption characteristics are obtained, sufficient sound-absorption characteristics can be maintained even in a case where the sound absorbing material is reduced in thickness or weight.

### Advantageous Effects of Invention

According to each aspect of the present invention, it is possible to obtain excellent sound-absorption characteristics in a low-frequency region.

### Description of Embodiments

Hereinafter, embodiments of the present invention will be specifically described. However, the present invention is not limited to the following embodiments, and can be carried out with various modifications within the scope of the gist thereof. Materials listed as examples in the present specification may be used singly or in combinations of two or more kinds thereof. In the present specification, in a case where a plurality of substances corresponding to each component exist in a composition, the used amount of each component in the composition means the total amount of the plurality of substances that exist in the composition, unless otherwise specified. A "(meth)acrylic acid" means at least one of acrylic acids and corresponding methacrylic acids. In the present specification, the expression "to" representing a numerical range indicates a range from a numerical value described before "to" to a numerical value described after "to". For example, description "a numerical value x to a numerical value y" (provided that, "x" and "y" are numerical values)" means a range of "x or more and y or less".

In a porous sound absorbing material of the present embodiment, an average cell size (average pore size) is 100 to 600 µm, and an apparent density is 40 to 140 kg/m³. By using such a porous sound absorbing material (low-frequency sound absorbing material), excellent sound-absorption characteristics (sound absorbability) in a low-frequency region can be obtained. According to the present embodiment, for example, excellent sound-absorption characteristics in a frequency region of 1000 Hz or less can be obtained, and particularly, excellent sound-absorption characteristics in a frequency region of 500 Hz or less can be obtained.

According to the present embodiment, since excellent sound-absorption characteristics are obtained, sufficient sound-absorption characteristics can be maintained even in a case where the sound absorbing material is reduced in thickness or weight. Therefore, according to the present embodiment, both of excellent sound-absorption characteristics in a low-frequency region and reduction in thickness and weight can be achieved. Thus, according to the present embodiment, a wide variety of use applications and locations of use of a sound absorbing material can be secured. Furthermore, according to the present embodiment, excellent sound-absorption characteristics can be obtained by using only a porous sound absorbing material as a single material. According to the present embodiment, it is possible to provide application of a porous body to sound absorption.

The present embodiment is excellent in sound-absorption characteristics in a low-frequency region, and thus can be suitably used as soundproof members (sound absorbing/insulating materials) in vehicles (such as automobiles and trains), aircrafts, buildings, piping, and the like.

When the average cell size of the porous sound absorbing material of the present embodiment is 100 µm or more, excellent sound-absorption characteristics are obtained, and the size can be suitably controlled in the production processes of a porous sound absorbing material. The average cell size of the porous sound absorbing material is preferably 150 µm or more, more preferably 200 µm or more, further preferably 250 µm or more, particularly preferably 300 µm or more, and extremely preferably 350 µm or more, from the viewpoint of easily obtaining excellent sound-absorption characteristics and the viewpoint of easily controlling the size in the production processes of a porous sound absorbing material. When the average cell size of the porous sound absorbing material of the present embodiment is 600 µm or less, excellent sound-absorption characteristics are obtained. The average cell size of the porous sound absorbing material is preferably 550 µm or less, more preferably 500 µm or less, further preferably 450 µm or less, and particularly preferably 400 µm or less, from the viewpoint of easily obtaining excellent sound-absorption characteristics. The average cell size of the porous sound absorbing material can be measured by image analysis of an arbitrary cross-sectional image of the porous sound absorbing material, and even in a case where the porous sound absorbing material includes open cells described below, the average cell size of the porous sound absorbing material can be measured by the same method.

When the apparent density of the porous sound absorbing material of the present embodiment is 40 kg/m³ or more, an increase in air capacity in the porous sound absorbing material, or the like, is suppressed, and thereby excellent sound-absorption characteristics are obtained. The apparent density of the porous sound absorbing material is preferably 45 kg/m³ or more, more preferably 50 kg/m³ or more, further preferably 55 kg/m³ or more, particularly preferably 60 kg/m³ or more, extremely preferably 65 kg/m³ or more, highly preferably 70 kg/m³ or more, even more preferably 75 kg/m³ or more, and further preferably 80 kg/m³ or more, from the viewpoint of easily obtaining excellent sound-absorption characteristics. When the apparent density of the porous sound absorbing material of the present embodiment is 140 kg/m³ or less, excellent sound-absorption characteristics are obtained. Furthermore, excellent lightweight properties (for example, lightweight properties for automobile use) and secondary processability are obtained and suitable open cells can be obtained. The apparent density of the porous sound absorbing material is preferably 135 kg/m³ or less, more preferably 130 kg/m³ or less, further preferably 120 kg/m³ or less, particularly preferably 110 kg/m³ or less, extremely preferably 100 kg/m³ or less, highly preferably 90 kg/m³ or less, and even more preferably 85 kg/m³ or less, from the viewpoint of easily obtaining excellent sound-absorption characteristics, the viewpoint of easily obtaining excellent lightweight properties and secondary processability, and the viewpoint of easily obtaining suitable open cells. The apparent density of the porous sound absorbing material can be measured according to "Cellular plastics-Polyethylene-Methods of test" of JIS K 6767 (1999).

The average cell size and the apparent density of the porous sound absorbing material can be adjusted by a mixing ratio of a foaming agent described below (for example, an organic foaming agent or an inorganic foaming agent) or the like, a vulcanization and foaming time, a foaming temperature, and the like.

The porous sound absorbing material of the present embodiment is a porous body. The term "porous" indicates an embodiment having numerous holes (pores) in a base material described below (for example, an embodiment being a foamed product), and in the present specification, every single hole is referred to as "cell". The cells may not necessarily have a spherical shape and may have an amorphous shape.

Cells included in the porous sound absorbing material may be cells with a closed cell structure (closed cells) in which cells are each independently arranged and may be cells with an open cell structure (open cells) in which a plurality of cells communicate with each other. The porous sound absorbing material may include at least one of closed cells and open cells, and in this case, the numerical ratio of the closed cells and the open cells is not particularly limited. That is, the porous sound absorbing material (porous body) can have an open cell structure or a semi-open/semi-closed cell structure. The open cell structure refers to a structure in which the open cell ratio is 100%. The semi-open/semi-closed cell structure refers to a structure in which the lower limit of the open cell ratio is more than 0% (the open cell ratio is preferably 10% or more) and the upper limit of the open cell ratio is less than 100%.

A method for preparing closed cells or open cells is not particularly limited, and in the case of imparting porous properties by foaming, examples thereof include a method of adjusting the type or addition amount of a foaming agent, a cross-linking agent, or the like, a method of adjusting processing conditions in a foaming step, and a method of mechanically breaking a membrane (a cell membrane) between cells forming closed cells to connect and communicate part or all of the cells. The air permeability and the open cell structure can be obtained, for example, by applying compressive deformation to the obtained porous body (for example, a sheet-shaped foamed product) by a constant-velocity twin roll or the like to break a cell membrane so that cells are communicated. Furthermore, numerous small holes are formed on the surface of the foamed product (foam body), and thereby cell communicating can be promoted. Small holes can also be formed on the surface of the foamed product (foam body) by providing numerous small needles on a surface of a constant-velocity twin roll or disposing a roll provided with numerous small needles before and/or after a constant-velocity twin roll.

The shape of the porous sound absorbing material of the present embodiment is not particularly limited, and may be delomorphous and may be amorphous. Examples of the shape of the porous sound absorbing material include a sheet shape, a columnar shape (such as a cylinder or a polygonal column), a conical shape, a polygonal pyramid shape, and a rod shape.

The air permeability of the porous sound absorbing material of the present embodiment is preferably in the following range. The air permeability of the porous sound absorbing material is preferably 0.1 cm³/cm²·s or more, more preferably 0.3 cm³/cm²·s or more, further preferably 0.4 cm³/cm²·s or more, particularly preferably 0.5 cm³/cm²·s or more, extremely preferably 0.8 cm³/cm²·s or more, highly preferably 1 cm³/cm²·s or more, even more preferably 1.2 cm³/cm²·s or more, further preferably 1.5 cm³/cm²·s or more, and particularly preferably 1.8 cm³/cm²·s or more, from the viewpoint of suppressing a decrease in viscous friction between sound and air so that target sound-absorption characteristics are easily obtained. The air permeability of the porous sound absorbing material is preferably 50 cm³/cm²·s or less, more preferably 40 cm³/cm²·s or less, further preferably 30 cm³/cm²·s or less, particularly preferably 20 cm³/cm²·s or less, extremely preferably 10 cm³/cm²·s or less, highly preferably 8 cm³/cm²·s or less, even more preferably 5 cm³/cm²·s or less, further preferably 3 cm³/cm²·s or less, and particularly preferably 2 cm³/cm²·s or less, from the viewpoint of easily suppressing deterioration in sound-absorption characteristics in a low-frequency region (for example, deterioration in sound-absorption characteristics in a low-frequency region caused by an increase in gas amount or an increase in cell size in the porous body). From these viewpoints, the air permeability of the porous sound absorbing material is preferably 0.1 to 50 cm³/cm²·s, more preferably 0.1 to 40 cm³/cm²·s, and further preferably 0.5 to 40 cm³/cm²·s. The air permeability of the porous sound absorbing material can be obtained by measuring the air flow rate when applying a certain differential pressure to a test piece, and can be measured according to Method A in "Testing methods for woven and knitted fabrics" of JIS L 1096 (2010). The air permeability of the porous sound absorbing material can be adjusted by an average cell size, a degree of generation of open cells, a mixing ratio of a foaming agent described below (for example, an organic foaming agent or an inorganic foaming agent) or the like, a vulcanization and foaming time, a foaming temperature, and the like.

The thickness of the porous sound absorbing material of the present embodiment is preferably 5 mm or more, more preferably 8 mm or more, further preferably 10 mm or more, particularly preferably more than 10 mm, extremely preferably 12 mm or more, highly preferably 15 mm or more, even more preferably 18 mm or more, and further preferably 20 mm or more, from the viewpoint of easily obtaining excellent sound-absorption characteristics. The thickness of the porous sound absorbing material is preferably 50 mm or less, more preferably 40 mm or less, further preferably 30 mm or less, and particularly preferably 25 mm or less, from the viewpoints of easily suppressing a decrease in secondary processability and easily suppressing an increase in mass. From these viewpoints, the thickness of the porous sound absorbing material is preferably 5 to 50 mm and more preferably 15 to 40 mm. The thickness of the porous sound absorbing material can be measured according to "Cellular plastics and rubbers - Determination of linear dimensions" of ISO 1923 (1981). The thickness of the porous sound absorbing material may be the thickness of a sheet-shaped porous sound absorbing material. The thickness of the porous sound absorbing material may be an average thickness.

The porous sound absorbing material of the present embodiment can contain at least one base material selected from the group consisting of a resin material and an elastomer.

Examples of the resin material include polyolefin; polystyrene; acrylic resins such as polymethylmethacrylate and styrene-(meth)acrylic acid ester copolymer; styrene-butadiene copolymer; polyvinyl acetate; polyvinyl alcohol; polyvinyl acetal; polyvinyl pyrrolidone; a petroleum resin; cellulose; cellulose derivatives such as cellulose acetate, cellulose nitrate, methylcellulose, hydroxymethyl cellulose, hydroxyethyl cellulose, and hydroxypropyl cellulose; aromatic polyesters such as a saturated alkyl polyester, polyethylene terephthalate, polybutylene telephthalate, and polyarylate; polyamide; polyacetal; polycarbonate; polyether sulfone; polyphenylene sulfide; polyether ether ketone; and copolymers having a structural unit derived from a vinyl polymerizable monomer and a structural unit derived from a nitrogen-containing vinyl monomer.

The resin material preferably includes polyolefin from the viewpoint of easily obtaining excellent sound-absorption characteristics. Examples of the polyolefin include polyethylene (such as low density polyethylene, medium density polyethylene, high density polyethylene, linear low density polyethylene, and linear ultralow density polyethylene), ionomer-based resins obtained by crosslinking the molecules of ethylene-propylene block copolymer, ethylene-propylene random copolymer, ethylene-butene block copolymer, ethylene-butene random copolymer, ethylene-vinyl acetate copolymer, ethylene-methyl methacrylate copolymer, or ethylene-methacrylic acid copolymer with metal ions, propylene homopolymer, propylene-ethylene random copolymer, propylene-butene random copolymer, propylene-butene block copolymer, polybutene, polypentene, propylene-ethylene-butene terpolymer, propylene-acrylic acid copolymer, propylene-maleic anhydride copolymer, alkylphenol-formaldehyde resin, and melamine-formaldehyde condensate.

The resin material preferably includes polyethylene from the viewpoint of easily obtaining excellent sound-absorption characteristics. The resin material may be used singly or in combination of two or more kinds thereof.

Examples of the elastomer include acrylonitrile-butadiene rubber (NBR), hydrogenated acrylonitrile-butadiene rubber (HNBR), carboxylated acrylonitrile-butadiene rubber (XNBR), acrylonitrile-butadiene-isoprene rubber (NBIR), acrylonitrile-isoprene rubber (NIR), chloroprene rubber (CR), isoprene rubber (IR), butyl rubber (IIR), natural rubber (NR), styrene-butadiene copolymer rubber (SBR), butadiene rubber (BR), ethylene-propylene-diene rubber (EPDM), urethane rubber, fluoro-rubber, acrylic rubber, and silicone rubber.

The elastomer preferably includes at least one selected from the group consisting of chloroprene rubber, natural rubber, and ethylene-propylene-diene rubber, from the viewpoint of having excellent foaming properties. The elastomer may be used singly or in combination of two or more kinds thereof.

The content of the base material is preferably in the following range on the basis of the total mass of the porous sound absorbing material. The content of the base material is preferably 10% by mass or more, more preferably 15% by mass or more, further preferably 20% by mass or more, particularly preferably 25% by mass or more, extremely preferably 30% by mass or more, and highly preferably 35% by mass or more, from the viewpoint of securing sufficient energy attenuation when sound is incident so that excellent sound-absorption characteristics are easily obtained. The content of the base material is preferably 90% by mass or less, more preferably 85% by mass or less, further preferably 80% by mass or less, particularly preferably 70% by mass or less, extremely preferably 60% by mass or less, highly preferably 50% by mass or less, and even more preferably 40% by mass or less, from the viewpoint of easily obtaining excellent sound-absorption characteristics. From these viewpoints, the content of the base material is preferably 10 to 90% by mass. From the viewpoint of easily obtaining excellent sound-absorption characteristics, the content of at least one selected from the group consisting of polyethylene, chloroprene rubber, and ethylene-propylene-diene rubber is preferably in the aforementioned range on the basis of the total mass of the porous sound absorbing material.

The content of at least one material A selected from the group consisting of polyethylene, chloroprene rubber, and ethylene-propylene-diene rubber is preferably in the following range on the basis of the total amount of the base material (the base material in the porous sound absorbing material). The content of the material A is preferably 50% by mass or more, more preferably 55% by mass or more, further preferably 60% by mass or more, particularly preferably 65% by mass or more, extremely preferably 80% by mass or more, highly preferably 90% by mass or more, even more preferably 95% by mass or more, further preferably 98% by mass or more, and particularly preferably 99% by mass or more, from the viewpoint of easily obtaining excellent sound-absorption characteristics. The base material in the porous sound absorbing material may be an embodiment in which the base material is substantially composed of the material A (substantially 100% by mass of the base material is the material A).

The porous sound absorbing material of the present embodiment may contain a filler. By using a filler, the porous sound absorbing material (porous body) can be reinforced. Furthermore, an improvement in processability at the time of production of the porous sound absorbing material, an enhancement of sound-absorption characteristics, and the like can also be achieved. The shape of the filler is not particularly limited, but the filler is generally powder, and examples of the shape thereof include a spherical shape and a plate shape. As the filler, an inorganic filler can be used. The filler may be used singly or in combination of two or more kinds thereof.

Examples of a constituent material for the inorganic filler include a metal material, an oxide, a nitride, a carbonate, a metallic hydroxide, a carbon-based material, talc, silicic acid and salts thereof (for example, aluminum silicate), clay, mica powder, and bentonite. Examples of the metal material include a metal simple substance, and mixtures and alloys of metals. The inorganic filler preferably includes at least one selected from the group consisting of a metal material, an oxide, and a carbonate.

The inorganic filler may be a metal filler including a metal material. The metal filler may be a filler composed of a metal material. Examples of the metal material include zinc (Zn), iron (Fe), tungsten (W), aluminum (Al), silicon (Si), titanium (Ti), copper (Cu), nickel (Ni), tin (Sn), silver (Ag), gold (Au), and an alloy including these metals. Examples of the alloy include sendust (Fe-Si-AI alloy), an iron alloy (excluding sendust; for example, stainless steel), and a tungsten alloy. The inorganic filler preferably includes at least one selected from the group consisting of sendust, a zinc simple substance, an iron alloy, and a tungsten alloy, from the viewpoint of easily obtaining excellent sound-absorption characteristics.

Examples of the oxide include zinc oxide, silicon oxide (silica), lead monoxide, and a composite oxide including these oxides. Examples of the nitride include boron nitride, aluminum nitride, and a composite oxide including these nitrides. Examples of the carbonate include calcium carbonate (for example, heavy calcium carbonate) and magnesium carbonate. Examples of the metallic hydroxide include calcium hydroxide, magnesium hydroxide, and aluminum hydroxide. Examples of the carbon-based material include acetylene black and carbon black (such as furnace black and Ketjen black). The inorganic filler preferably includes at least one selected from the group consisting of zinc oxide and calcium carbonate, from the viewpoint of easily obtaining excellent processability.

The specific gravity of the inorganic filler (for example, a metal filler) is preferably 4 or more, more preferably 5 or more, further preferably 6 or more, particularly preferably 7 or more, and extremely preferably 8 or more, from the viewpoint of easily obtaining excellent sound-absorption characteristics. The specific gravity of the inorganic filler is preferably 15 or less, more preferably 12 or less, further preferably 11 or less, and particularly preferably 10 or less, from the viewpoint of easily obtaining excellent sound-absorption characteristics. From these viewpoints, the specific gravity of the inorganic filler is preferably 4 to 15 and more preferably 4 to 10. The specific gravity of the inorganic filler can be measured according to "Methods of measuring density and specific gravity of solid" of JIS Z 8807 (2012).

The average particle size of the filler (for example, an inorganic filler such as a metal filler) is preferably in the following range. The average particle size of the filler is preferably 1 µm or more, more preferably 3 µm or more, further preferably 5 µm or more, particularly preferably 8 µm or more, and extremely preferably 10 µm or more, from the viewpoint that the filler can be easily kneaded and dispersed with other components (for example, a base material) at the time of production of the porous body. The average particle size of the filler is preferably 50 µm or less, more preferably 40 µm or less, further preferably 30 µm or less, particularly preferably 25 µm or less, extremely preferably 20 µm or less, highly preferably less than 20 µm, even more preferably 15 µm or less, and further preferably 12 µm or less, from the viewpoint of easily suppressing the enlargement of the cell size of the porous body. From these viewpoints, the average particle size of the filler is preferably 1 to 50 µm and more preferably 5 to 30 µm.

The content of the filler (for example, an inorganic filler) is preferably in the following range with respect to 100 parts by mass of the base material. The content of the filler is preferably 10 parts by mass or more, more preferably 20 parts by mass or more, further preferably 30 parts by mass or more, particularly preferably 50 parts by mass or more, extremely preferably 70 parts by mass or more, highly preferably 90 parts by mass or more, even more preferably more than 90 parts by mass, and further preferably 100 parts by mass or more, from the viewpoint of easily obtaining excellent strength of the porous sound absorbing material. The content of the filler is preferably 200 parts by mass or less, more preferably 180 parts by mass or less, further preferably 150 parts by mass or less, particularly preferably 120 parts by mass or less, and extremely preferably 110 parts by mass or less, from the viewpoint of easily obtaining excellent dispersibility in the base material, excellent processability, and excellent appearance of the porous sound absorbing material. The content of the filler may be less than 110 parts by mass. From these viewpoints, the content of the filler is preferably 10 to 200 parts by mass.

The content of the metal material (for example, a metal filler) is preferably in the following range with respect to 100 parts by mass of the base material. The content of the metal material is preferably 1 part by mass or more, more preferably 3 parts by mass or more, further preferably 5 parts by mass or more, particularly preferably 8 parts by mass or more, extremely preferably 10 parts by mass or more, highly preferably 15 parts by mass or more, even more preferably 20 parts by mass or more, further preferably 25 parts by mass or more, and particularly preferably 30 parts by mass or more, from the viewpoint of easily obtaining a suitable density, mass, or specific surface area as a porous body so that excellent sound-absorption characteristics are easily obtained. The content of the metal material is preferably 50 parts by mass or less, more preferably 45 parts by mass or less, further preferably 40 parts by mass or less, and particularly preferably 35 parts by mass or less, from the viewpoint of easily suppressing a decrease in secondary processability due to hardening of the porous body so that an open-cell foam body excellent in air permeability is easily obtained, and the viewpoint of easily obtaining excellent sound-absorption characteristics. From these viewpoints, the content of the metal material is preferably 1 to 50 parts by mass and more preferably 5 to 50 parts by mass. The content of at least one selected from the group consisting of sendust, a zinc simple substance, an iron alloy, and a tungsten alloy is preferably in the aforementioned range with respect to 100 parts by mass of the base material, from the viewpoint of easily obtaining excellent sound-absorption characteristics. The porous sound absorbing material of the present embodiment may not contain a metal material (for example, a metal filler), and the content of the metal material (for example, a metal filler) may be 0.1 parts by mass or less, 0.01 parts by mass or less, or 0.001 parts by mass or less with respect to 100 parts by mass of the base material.

The content of at least one metal material A selected from the group consisting of sendust, a zinc simple substance, an iron alloy, and a tungsten alloy is preferably in the following range on the basis of the total amount of the metal material (the metal material in the porous sound absorbing material). The content of the metal material A is preferably 50% by mass or more, more preferably 80% by mass or more, further preferably 90% by mass or more, particularly preferably 95% by mass or more, extremely preferably 98% by mass or more, and highly preferably 99% by mass or more, from the viewpoint of easily obtaining excellent sound-absorption characteristics. The metal material in the porous sound absorbing material may be an embodiment in which the metal material is substantially composed of the metal material A (substantially 100% by mass of the metal material is the metal material A).

The content of the oxide and/or the content of the carbonate (for example, calcium carbonate) is preferably in the following range with respect to 100 parts by mass of the base material. The content of the oxide and/or the content of the carbonate is preferably 10 parts by mass or more, more preferably 15 parts by mass or more, further preferably 20 parts by mass or more, particularly preferably 25 parts by mass or more, extremely preferably 30 parts by mass or more, highly preferably 50 parts by mass or more, even more preferably 60 parts by mass or more, further preferably 70 parts by mass or more, particularly preferably 75 parts by mass or more, and extremely preferably more than 75 parts by mass, from the viewpoint of easily suppressing a decrease in secondary processability, the viewpoint of easily obtaining cells with an open cell structure which are excellent in air permeability, and the viewpoint of easily obtaining excellent sound-absorption characteristics. The content of the oxide and/or the content of the carbonate is preferably 100 parts by mass or less, more preferably less than 100 parts by mass, further preferably 95 parts by mass or less, particularly preferably 90 parts by mass or less, extremely preferably 85 parts by mass or less, and highly preferably 80 parts by mass or less, from the viewpoint of easily obtaining excellent sound-absorption characteristics. From these viewpoints, the content of the oxide and/or the content of the carbonate is preferably 10 to 100 parts by mass.

The content of the calcium carbonate is preferably in the following range on the basis of the total amount of the carbonate (the carbonate in the porous sound absorbing material). The content of the calcium carbonate is preferably 50% by mass or more, more preferably 80% by mass or more, further preferably 90% by mass or more, particularly preferably 95% by mass or more, extremely preferably 98% by mass or more, and highly preferably 99% by mass or more, from the viewpoint of easily obtaining excellent sound-absorption characteristics. The carbonate in the porous sound absorbing material may be an embodiment in which the carbonate is substantially composed of calcium carbonate (substantially 100% by mass of the carbonate is calcium carbonate).

The content of the filler (for example, an inorganic filler) is preferably in the following range on the basis of the total mass of the porous sound absorbing material. The content of the filler is preferably 10% by mass or more, more preferably 15% by mass or more, further preferably 20% by mass or more, particularly preferably 25% by mass or more, extremely preferably 30% by mass or more, and highly preferably 35% by mass or more, from the viewpoint of easily obtaining excellent sound-absorption characteristics. The content of the filler is preferably 80% by mass or less, more preferably 70% by mass or less, further preferably 60% by mass or less, particularly preferably 50% by mass or less, extremely preferably 45% by mass or less, and highly preferably 40% by mass or less, from the viewpoint of easily obtaining excellent sound-absorption characteristics. From these viewpoints, the content of the filler is preferably 10 to 80% by mass.

The content of the metal material (for example, a metal filler) is preferably in the following range on the basis of the total mass of the porous sound absorbing material. The content of the metal material is preferably 1% by mass or more, more preferably 3% by mass or more, further preferably 5% by mass or more, particularly preferably 8% by mass or more, and extremely preferably 10% by mass or more, from the viewpoint of easily obtaining excellent sound-absorption characteristics. The content of the metal material is preferably 50% by mass or less, more preferably 40% by mass or less, further preferably 30% by mass or less, particularly preferably 20% by mass or less, extremely preferably 15% by mass or less, and highly preferably 12% by mass or less, from the viewpoint of easily obtaining excellent sound-absorption characteristics. From these viewpoints, the content of the metal material is preferably 1 to 50% by mass. The porous sound absorbing material of the present embodiment may not contain a metal material (for example, a metal filler), and the content thereof may be 0.1% by mass or less, 0.01% by mass or less, or 0.001% by mass or less on the basis of the total mass of the porous sound absorbing material.

The content of the oxide and/or the content of the carbonate (for example, calcium carbonate) is preferably in the following range on the basis of the total mass of the porous sound absorbing material. The content of the oxide and/or the content of the carbonate is preferably 5% by mass or more, more preferably 8% by mass or more, further preferably 10% by mass or more, particularly preferably 15% by mass or more, extremely preferably 20% by mass or more, and highly preferably 25% by mass or more, from the viewpoint of easily suppressing a decrease in secondary processability, the viewpoint of easily obtaining cells with an open cell structure which are excellent in air permeability, and the viewpoint of easily obtaining excellent sound-absorption characteristics. The content of the oxide and/or the content of the carbonate is preferably 50% by mass or less, more preferably 45% by mass or less, further preferably 40% by mass or less, particularly preferably 35% by mass or less, and extremely preferably 30% by mass or less, from the viewpoint of easily obtaining excellent sound-absorption characteristics. From these viewpoints, the content of the oxide and/or the content of the carbonate is preferably 5 to 50% by mass.

The content of the inorganic filler is preferably in the following range on the basis of the total mass of the filler (the filler in the porous sound absorbing material). The content of the inorganic filler is preferably 50% by mass or more, more preferably 80% by mass or more, further preferably 90% by mass or more, particularly preferably 95% by mass or more, extremely preferably 98% by mass or more, and highly preferably 99% by mass or more, from the viewpoint of easily obtaining excellent sound-absorption characteristics. The filler in the porous sound absorbing material may be an embodiment in which the filler is substantially composed of an inorganic filler (substantially 100% by mass of the filler is an inorganic filler). The content of the metal material, the content of the oxide, and/or the content of the carbonate (for example, calcium carbonate) is preferably in the aforementioned range on the basis of the total amount of the filler, from the viewpoint of easily obtaining excellent sound-absorption characteristics.

From the viewpoint of easily obtaining excellent sound-absorption characteristics, the porous sound absorbing material of the present embodiment is preferably an embodiment containing at least one base material selected from the group consisting of a resin material and an elastomer, and a metal filler, in which the content of the metal filler is 5 to 50 parts by mass with respect to 100 parts by mass of the base material, the specific gravity of the metal filler is 4 to 10, and the average particle size of the metal filler is 5 to 30 µm.

The porous sound absorbing material of the present embodiment may contain a softener. By using the softener, processability can be improved. Examples of the softener include drying oils or animal and vegetable oils (for example, linseed oil), petroleum-based oils (such as paraffinic process oil, naphthenic process oil, and aromatic process oil), asphalts, low molecular weight polymers, organic acid esters (for example, phthalic ester such as di-2-ethylhexyl phthalate (DOP) or dibutyl phthalate (DBP); phosphate ester; higher fatty acid ester; alkyl sulfonate ester), and tackifiers. The softener preferably includes petroleum-based oils from the viewpoint of easily obtaining excellent foaming processability. The softener may be used singly or in combination of two or more kinds thereof.

The content of the softener is preferably in the following range with respect to 100 parts by mass of the base material. The content of the softener is preferably 1 part by mass or more, more preferably 3 parts by mass or more, and further preferably 5 parts by mass or more, from the viewpoint of easily obtaining excellent foaming processability. The content of the softener may be 10 parts by mass or more, 20 parts by mass or more, 30 parts by mass or more, 40 parts by mass or more, or 50 parts by mass or more, and may be more than 50 parts by mass. The content of the softener is preferably 100 parts by mass or less, more preferably 90 parts by mass or less, further preferably 80 parts by mass or less, particularly preferably 70 parts by mass or less, and extremely preferably 60 parts by mass or less, from the viewpoint of easily obtaining excellent foaming processability. The content of the softener may be less than 20 parts by mass. From these viewpoints, the content of the softener is preferably 1 to 100 parts by mass.

The porous sound absorbing material of the present embodiment may contain a fatty acid. The fatty acid can be used as a processing aid. By using the fatty acid, processability can be improved. The fatty acid can include at least one selected from the group consisting of a saturated fatty acid and an unsaturated fatty acid. The number of carbon atoms of the fatty acid is preferably 8 to 30, more preferably 10 to 20, and further preferably 15 to 18. Examples of the fatty acid include stearic acid, palmitic acid, and oleic acid. The fatty acid preferably includes stearic acid from the viewpoint of easily obtaining excellent foaming processability. The fatty acid may be used singly or in combination of two or more kinds thereof.

The content of the fatty acid is preferably in the following range with respect to 100 parts by mass of the base material. The content of the fatty acid is preferably 1 part by mass or more, more preferably 2 parts by mass or more, and further preferably 3 parts by mass or more, from the viewpoint of easily obtaining excellent foaming processability. The content of the fatty acid is preferably 10 parts by mass or less, more preferably 8 parts by mass or less, and further preferably 5 parts by mass or less, from the viewpoint of easily obtaining excellent foaming processability. From these viewpoints, the content of the fatty acid is preferably 1 to 10 parts by mass.

The porous sound absorbing material of the present embodiment may contain other arbitrary additives according to any purposes. Examples of the additives include a lubricant, a plasticizer, a foaming nucleator, an anti-aging agent, an antioxidant, a pigment, a colorant, a fungicide, a flame retardant, an ultraviolet absorber, and a light stabilizer.

The porous sound absorbing material of the present embodiment may be a foamed product, and can be obtained by foaming a foaming composition (foamable composition) using a foaming agent. That is, the present embodiment can provide a foaming composition giving a porous sound absorbing material having an average cell size of 100 to 600 µm and an apparent density of 40 to 140 kg/m³. The foaming composition of the present embodiment can contain a component contained in a porous sound absorbing material and a foaming agent. The present embodiment can provide a method for producing a porous sound absorbing material by which a porous sound absorbing material having an average cell size of 100 to 600 µm and an apparent density of 40 to 140 kg/m³ is obtained by foaming the foaming composition. The expansion ratio (a density ratio before and after foaming; being an apparent density after foaming) at the time of foaming the foaming composition to obtain a foamed product is preferably 5 to 30 times, more preferably more than 6 times and 25 times or less, further preferably 7 to 22 times, and particularly preferably 9 to 20 times, from the viewpoint of achieving a balance between reduction in weight and the average cell size of the porous sound absorbing material. The expansion ratio may be less than 10 times.

The porous sound absorbing material of the present embodiment can also be used by being combined and integrated with other materials. For example, a sheet-shaped porous sound absorbing material can also be used by being bonded and integrated with a rubber sheet, a resin sheet, woven fabric, non-woven fabric, a gypsum board, a wooden board, a metal plate, or the like.

The method for producing a porous sound absorbing material of the present embodiment is not particularly limited. The method for producing a porous sound absorbing material of the present embodiment is, for example, a method for producing a porous sound absorbing material, the method including foaming a foamable composition containing a base material (at least one selected from the group consisting of a resin material and an elastomer) and a foaming agent to obtain a foamed product (for example, a foamed product having an expansion ratio of 5 to 30 times), and then compressing this foamed product to communicate part or all of closed cells included in the above-described foamed product, thereby obtaining open cells. The foamable composition may contain, as necessary, a filler, a processing aid, a softener, a cross-linking agent, a cross-linking accelerator, a foaming auxiliary, or the like. When using a resin material and an elastomer as a base material, operation procedures, apparatuses, and the like suitable for the base material can be appropriately selected.

The method for producing a porous sound absorbing material of the present embodiment includes, for example, a foamed product preparation step of foaming a foamable composition containing a base material and a foaming agent to obtain a foamed product and a compressing step (a compressing and communicating step) of mechanically compressing the foamed product.

The foamed product preparation step may have a composition preparation step of mixing a base material and a foaming agent to obtain a foamable composition and a foaming step of foaming the foamable composition to obtain a foamed product.

The composition preparation step may include a masticating step of masticating a base material to obtain a masticated product (a masticated base material), a first kneading step of mixing the above-described masticated product and an additive other than a foaming agent (for example, a filler such as a metal filler or calcium carbonate) to obtain a first kneaded product, and a second kneading step of mixing the above-described first kneaded product and a foaming agent to obtain a foamable composition (a second kneaded product), in this order.

When materials are kneaded in each step, kneading can be performed using a roll kneading machine (also simply referred to as "roll"), a banbury mixer, a kneader, a short-axis or biaxial extruder, or the like. Furthermore, in the case of molding a sheet, the sheet may be molded in a batch manner by a pressing machine, a roll, or the like, and may be molded using a calender molding machine, or an extruder equipped with a T die or the like and a roll. Part or all of materials to be kneaded are melted and mixed or dry-blended in advance, and are then supplied to a molding machine (for example, an extruder equipped with a T die), and thereby a continuous sheet molding can be perfomred.

The masticating step is, for example, a pre-treatment step of mechanically applying shear force to a base material (particularly, an elastomer) using a mixing roll having three rolls to appropriately plasticize the base material. The temperature (the surface temperature of the roll) at which masticating is performed is generally 20°C to 200°C although varying depending on the hardness of the base material. The whole amount of the base material may not be masticated at once, and the base material can also be kneaded while gradually increasing the amount thereof. Note that, the masticating step can also be omitted depending on the type or physical properties of the base material.

The first kneading step is a kneading step that is performed for adding an additive other than a foaming agent to the masticated product. In the first kneading step, for example, a mixing roll having three rolls can be used. The first kneading step can also be performed continuously from the masticating step. The temperature (the surface temperature of the roll) at which the first kneading step is performed is generally 20°C to 200°C although varying depending on the hardness of the base material while including additives other than a foaming agent. The whole amount of the additives other than a foaming agent may not be added at once, and kneading can also be performed while gradually increasing the amounts of the additives other than a foaming agent. Examples of the additive other than a foaming agent include a filler, a processing aid, and a softener.

Until reaching the foaming step after the completion of the first kneading step, a "warming step" can also be performed in which kneading is performed while the surface temperature of a mixing roll is increased, for example, from a temperature at which the first kneading step is performed to a further higher temperature once and then the temperature is decreased again.

The second kneading step is a kneading step performed for adding a foaming agent to the first kneaded product obtained by the first kneading step. The whole amount of the foaming agent is not necessarily added at once, and may be gradually added. Furthermore, part or all of the foaming agent can be used in the form of a master batch. In the second kneading step, in addition to the foaming agent, the below-mentioned component contributing to foaming or cross-linking may be added. In the second kneading step, for example, a mixing roll having three rolls can be used. The second kneading step can also be performed continuously from the first kneading step or the warming step. The temperature (the surface temperature of the roll) at which the second kneading step is performed is generally 20°C to 200°C although varying depending on the hardness of the second kneaded product while including a foaming agent. However, it is preferable to perform at a low temperature as much as possible in a range that does not impair kneading so as not to cause foaming before the foaming step.

The foaming step is a step of foaming the foamable composition (second kneaded product) obtained by the second kneading step to obtain a foamed product. In the foaming step, the foamable composition can be foamed by heating the foamable composition. In the foaming step, at least one foaming method or the like of a foaming method of foaming a foamable composition in a closed mold form and a foaming method of freely expanding and foaming a foamable composition can be performed. The foamable composition to be foamed may be, for example, a sheet body obtained by molding a foamable composition into a sheet shape. As the foaming method of foaming a foamable composition in a closed mold form, a method can be used in which a foamable composition is placed in a metal mold form, and the above-described metal mold form is then disposed between heating plates of a hot press to thereby foam the foamable composition. Furthermore, as the foaming method of freely expanding and foaming a foamable composition, a method can be used in which a foamable composition is disposed directly in an oven and heated to be thereby foamed.

The expansion ratio, the average cell size, the apparent density, and the air permeability of the foamed product can be adjusted, for example, by the mixing ratio of various base materials, a foaming agent, and the like at the time of producing the foamed product; conditions of kneading, foaming, and the like; and the like. However, even in the case of using the same production method or apparatus, since the foaming phenomenon tends to be easily influenced by a delicate factor (for example, a difference in elapsed time until the process proceeds to the next step from a certain step) and tends to be easily influenced by the size or the like of the apparatus although the operation principle is the same, foamed products having completely the same attribute may be hardly obtained, and in this case, the mixing composition or processing conditions can be adjusted by an operator having general knowledge in the technical field.

In the compressing step (compressing and communicating step), by mechanically compressing the foamed product, part or all of closed cells included in the foamed product can be formed into open cells. In the compressing step, communicating can be performed by compressing the foamed product and mechanically breaking part of walls of cells (for example, closed cells) included in the foamed product, so that open cells in which a plurality of cells are communicated with each other are increased. The compressing step can be performed by compressing the foamed product using a pressing machine, a twin roll, or the like. The pressure applied to the foamed product or the number of times of pressing can be adjusted according to a target foamed product.

The process from the masticating step to the compressing step mentioned above can be performed separately for each step, and part or all of the steps may be continuously performed. In the case of continuously performing part or all of the steps, a continuous apparatus with which these steps can be continuously performed can be used.

The porous sound absorbing material can be produced using a kneader and/or an extruder in kneading. For example, a base material and materials other than the base material are supplied to a supply port of the extruder in advance, and then, instead of performing the masticating step, the first kneading step, and the second kneading step using a roll, respective steps corresponding to these steps can be substantially combined and continuously performed by an extrusion and kneading operation once with an extruder. Furthermore, a mixture obtained by dry-blending a filler or the like with a resin material in advance is melted and kneaded while suppressing foaming in the extruder to obtain a foamable composition, and then the foamed product preparation step and the compressing step similar to those for the elastomer can be performed using this foamable composition.

An example of the porous sound absorbing material of the present embodiment can be obtained as a sheet-shaped sound absorbing material by a known sheet molding method using a T-die extruder, a calender molding machine, or the like. For example, it is possible to obtain by subjecting a foaming composition, which is obtained by adding a cross-linking agent and a foaming agent to polyethylene, to extrusion molding into a sheet shape at an extrusion temperature of 80°C to 150°C. A mixture obtained by dry-blending, as necessary, an additive such as a foaming auxiliary, a processing aid, a pigment, a flame retardant, a filler, a softener (further, a cross-linking accelerator, an antioxidant, an ultraviolet absorber, a light stabilizer, or the like) in advance may be supplied to the aforementioned foaming composition from a hopper of a T-die extruder. In dry-blending, part or all of an additive can be used in the form of a master batch. Furthermore, in T-die extrusion and calender molding, a foaming composition obtained by melting and mixing part or all of an additive in polyethylene in advance using a single screw extruder, a twin screw extruder, a banbury mixer, a kneader, or the like can also be used.

The foaming agent is classified into a solid compound which is decomposed to generate a gas; a liquid which is evaporated by heating; an inert gas which may be dissolved in the base material under pressure; and the like, but any of these can be used. Examples of the foaming agent include an organic foaming agent and an inorganic foaming agent. The foaming agent may be used singly or in combination of two or more kinds thereof.

Examples of organic foaming agents include an azo-based compound, an N-nitroso-based compound, a hydrazide-based compound, a semicarbazide-based compound, fluorinated alkane, and a triazole-based compound.

Examples of the azo-based compound include azodicarbonamide (ADCA), barium azodicarboxylate, azobisisobutylonitrile (AIBN), azocyclohexylnitrile, and azodiaminobenzene. Examples of the N-nitroso-based compound include N,N'-dinitrosopentamethylenetetramine (DTP), N,N'-dimethyl-N,N'-dinitrosoterephthalamide, and trinitrosotrimethyltriamine. Examples of the hydrazide-based compound include 4,4'-oxybis(benzenesulfonylhydrazide) (OBSH), paratoluenesulfonylhydrazide, diphenylsulfone-3,3'-disulfonylhydrazide, 2,4-toluenedisulfonylhydrazide, p,p-bis(benzenesulfonylhydrazide)ether, benzene-1,3-disulfonylhydrazide, and allylbis(sulfonylhydrazide). Examples of the semicarbazide-based compound include p-toluylenesulfonylsemicarbazide and 4,4'-oxybis(benzenesulfonylsemicarbazide). Examples of the fluorinated alkane include trichloromonofluoromethane and dichloromonofluoromethane. Examples of the triazole-based compound include 5-morpholyl-1,2,3,4-thiatriazole.

Examples of the inorganic foaming agent include hydrogencarbonate such as sodium hydrogen carbonate and ammonium hydrogen carbonate; carbonate such as sodium carbonate and ammonium carbonate; nitrite such as sodium nitrite and ammonium nitrite; borohydride salt such as sodium borohydride; and azides.

The foaming agent preferably includes an organic foaming agent, more preferably includes at least one selected from the group consisting of an azo-based compound and an N-nitroso-based compound, and further preferably includes at least one selected from the group consisting of azodicarbonamide (ADCA) and N,N'-dinitrosopentamethylenetetramine (DTP), from the viewpoint of easily obtaining excellent foaming properties.

The used amount of the foaming agent is preferably in the following range with respect to 100 parts by mass of the base material. The used amount of the foaming agent is preferably 1 part by mass or more, more preferably 2 parts by mass or more, and further preferably 3 parts by mass or more, from the viewpoint of easily obtaining excellent foaming properties. The used amount of the foaming agent may be 5 parts by mass or more or 8 parts by mass or more. The used amount of the foaming agent is preferably 20 parts by mass or less, more preferably 15 parts by mass or less, and further preferably 10 parts by mass or less, from the viewpoint of easily suppressing a decrease in stiffness of the porous sound absorbing material due to excessive foaming. From these viewpoints, the used amount of the foaming agent is preferably 1 to 20 parts by mass.

The foamable composition may contain a component contributing to foaming or cross-linking (excluding a foaming agent) and may contain an additive that is subsidiarily used. Examples of the component contributing to foaming or cross-linking include a foaming auxiliary, a cross-linking agent, a cross-linking accelerator, and a cross-linking retardant. Examples of the additive that is subsidiarily used include a processing aid and a softener.

Examples of the foaming auxiliary include a urea-based compound (for example, urea), a salicylic acid-based compound, and a benzoic acid-based compound.

The porous sound absorbing material and/or the foamable composition of the present embodiment may contain a cross-linking agent (vulcanizing agent), a cross-linking accelerator (vulcanization accelerator), a cross-linking retardant (vulcanization retardant), or the like, from the viewpoint of easily obtaining a desired average cell size by controlling the foaming phenomenon. Each of the cross-linking agent, the cross-linking accelerator, and the cross-linking retardant may be used singly or in combination of two or more kinds thereof. In a case where the porous sound absorbing material and/or the foamable composition of the present embodiment contains an elastomer (such as chloroprene rubber or ethylene-propylene-diene rubber), the porous sound absorbing material and/or the foamable composition preferably contains at least one selected from the group consisting of a cross-linking agent and a cross-linking accelerator, and a cross-linking agent may be used in combination with a cross-linking accelerator and/or a cross-linking retardant as necessary.

As a cross-linking agent, a suitable cross-linking agent may be selected according to the type of the base material, or the like. Examples of the cross-linking agent include sulfur, sulfur compounds (such as polysulfide and 4,4'-dithiodimorpholine), selenium, organic peroxides (such as cumene hydroperoxide, t-butyl hydroperoxide, dicumyl peroxide, and acetylacetone peroxide), polyamines, oximes (such as p-quinone dioxime and p,p'-dibenzoylquinone dioxime), nitroso compounds (for example, p-dinitrosobenzine), ammonium salts (for example, ammonium benzoate), and metal oxides (such as zinc oxide and magnesium oxide). Zinc oxide may be used as a cross-linking agent and may be used as a filler.

Examples of the cross-linking accelerator include thiazoles (such as 2-mercaptobenzothiazole and dibenzothiazyl disulfide), dithiocarbamic acids (such as sodium dimethyldithiocarbamate, sodium diethyldithiocarbamate, zinc dimethyldithiocarbamate, and zinc diethyldithiocarbamate), guanidines (such as diphenyl guanidine and di-o-tolyl guanidine), sulfenamides (such as benzothiazyl-2-diethyl sulfenamide and N-cyclohexyl-2-benzothiazyl sulfenamide), thiurams (such as tetramethylthiuram monosulfide and tetramethylthiuram disulfide), xanthogenic acids (such as sodium isopropylxanthate and zinc isopropylxanthate), aldehyde ammonias (such as acetaldehyde ammonia and hexamethylenetetramine), aldehydeamines (such as n-butylaldehyde aniline and butylaldehyde monobutylamine), and thioureas (diethylthiourea and trimethylthiourea).

The content of the cross-linking agent is preferably in the following range with respect to 100 parts by mass of the base material. The content of the cross-linking agent is preferably 1 part by mass or more, more preferably 2 parts by mass or more, and further preferably 3 parts by mass or more, from the viewpoint of achieving a balance between foaming and cross-linking. The content of the cross-linking agent is preferably 10 parts by mass or less, more preferably 8 parts by mass or less, and further preferably 5 parts by mass or less, from the viewpoint of achieving a balance between foaming and cross-linking. From these viewpoints, the content of the cross-linking agent is preferably 1 to 10 parts by mass.

The content of the cross-linking accelerator is preferably in the following range with respect to 100 parts by mass of the base material. The content of the cross-linking accelerator is preferably 1 part by mass or more, more preferably 2 parts by mass or more, further preferably 3 parts by mass or more, and particularly preferably 4 parts by mass or more, from the viewpoint of achieving a balance between foaming and cross-linking. The content of the cross-linking accelerator is preferably 10 parts by mass or less, more preferably 8 parts by mass or less, and further preferably 5 parts by mass or less, from the viewpoint of achieving a balance between foaming and cross-linking. From these viewpoints, the content of the cross-linking accelerator is preferably 1 to 10 parts by mass.

The porous sound absorbing material of the present embodiment may contain a cross-linking retardant (vulcanization retardant) as necessary, as an additive delaying the cross-linking (vulcanization) in contradiction to the cross-linking accelerator. Examples of the cross-linking retardant include organic acids (such as phthalic anhydride, benzoic acid, and salicylic acid) and amines (such as N-nitroso-diphenylamine and N-nitroso-phenyl-β-naphthylamine).

In the case of using a cross-linking retardant, the content of the cross-linking retardant is preferably in the following range with respect to 100 parts by mass of the base material. The content of the cross-linking retardant is preferably 1 part by mass or more, more preferably 2 parts by mass or more, further preferably 3 parts by mass or more, and particularly preferably 4 parts by mass or more, from the viewpoint of achieving a balance between foaming and cross-linking. The content of the cross-linking accelerator is preferably 10 parts by mass or less, more preferably 8 parts by mass or less, and further preferably 5 parts by mass or less, from the viewpoint of achieving a balance between foaming and cross-linking.

In a sound absorption method of the present embodiment, sound to be absorbed is absorbed using the porous sound absorbing material of the present embodiment. In the sound absorption method of the present embodiment, sound can be absorbed by disposing the porous sound absorbing material in a transmission pathway of sound to be absorbed. In the sound absorption method of the present embodiment, sound in a particular frequency region can be absorbed. The frequency region of sound to be absorbed may be 1000 Hz or less (for example, 500 to 1000 Hz, or more than 500 Hz and 1000 Hz or less) and may be 500 Hz or less (for example, 300 to 500 Hz). The sound absorption coefficient of sound in 500 Hz or 1000 Hz is preferably 0.4 or more, more preferably 0.5 or more, and further preferably 0.6 or more.

### Examples

Hereinafter, the contents of the present invention will be more specifically described using Examples and Comparative Examples; however, the present invention is not limited to the following Examples.

### <Use materials>

### (Base material)

Ethylene-propylene-diene rubber (hereinafter, referred to as "EPDM"): manufactured by Mitsui Chemicals, Inc., "EMB-EPT4021"
Chloroprene rubber (hereinafter, referred to as "CR"): manufactured by Tosoh Corporation, "Skyprene B-30"
Low density polyethylene (hereinafter, referred to as "LDPE"): manufactured by Japan Polyethylene Corporation, "LF640MA"

### (Filler)

### [Metal filler]

Sendust A: manufactured by Sanyo Special Steel Co., Ltd., Fe-Si-AI alloy-based powder, specific gravity: 8 g/cm³, average particle size: 10 µm
Sendust B: manufactured by Sanyo Special Steel Co., Ltd., Fe-Si-AI alloy-based powder, specific gravity: 8 g/cm³, average particle size: 30 µm
Sendust C: manufactured by Sanyo Special Steel Co., Ltd., Fe-Si-AI alloy-based powder, specific gravity: 8 g/cm³, average particle size: 5 µm
Zinc powder: manufactured by Wako Pure Chemical Industries, Ltd., Zinc powder
Iron alloy powder: manufactured by Mitsuwa Chemicals Co., Ltd., "sus304L", Stainless steel powder
Tungsten alloy powder: Tungsten heavy metal powder

### [Other fillers]

Calcium carbonate: manufactured by Shiraishi Calcium Kaisha, Ltd., "WHITON SB"
Zinc oxide for filler: manufactured by SAKAI CHEMICAL INDUSTRY CO., LTD., "Zinc Oxide No. 2"

The specific gravity of the sendusts A to C was measured according to "Methods of measuring density and specific gravity of solid" of JIS Z 8807 (2012).

The average particle size of the sendusts A to C was measured using a scanning electron microscope (XL-30S° FEG, manufactured by Koninklijke Philips N.V.). Specifically, first, a photograph of sendust was taken with 5000 to 10000-fold magnification using a scanning electron microscope. The captured image was processed using image analysis software (IP-1000PC, manufactured by Asahi Kasei Engineering Corporation), and the equivalent circle diameter of primary particles within a unit viewing field was obtained and then arithmetically averaged. The number of particles to be observed was set to 30.

### (Processing aid)

Stearic acid: manufactured by NOF CORPORATION, "stearic acid powder Sakura"

### (Softener)

Process oil: manufactured by Idemitsu Kosan Co., Ltd., "Diana Process Oil PW-90", paraffinic process oil

### (Cross-linking agent)

As a cross-linking agent, sulfur was used in the case of using EPDM as a base material, zinc oxide (zinc oxide for a cross-linking agent) was used in the case of using CR as a base material, and an organic peroxide was used in the case of using LDEP as a base material.
Sulfur: manufactured by Hosoi Chemical Industry Co., Ltd., Sulfur fine powder S-200 mesh
Zinc oxide for cross-linking agent: manufactured by SAKAI CHEMICAL INDUSTRY CO., LTD., Zinc Oxide No. 2
Organic peroxide: manufactured by NOF CORPORATION, "PERCUMYL D", dicumyl peroxide

### (Cross-linking accelerator)

Thiazole: manufactured by OUCHI SHINKO CHEMICAL INDUSTRIAL CO., LTD., "NOCCELER M", 2-mercaptobenzothiazole
Thiuram: manufactured by OUCHI SHINKO CHEMICAL INDUSTRIAL CO., LTD., "NOCCELER TT", tetramethylthiuram disulfide

### (Foaming agent)

Azodicarbonamide: manufactured by SANKYO KASEI CO., LTD., "CELLMIC C-1"

### (Foaming auxiliary)

Urea: manufactured by EIWA CHEMICAL IND. CO., LTD, "CELLPASTE 101"

### <Production of porous sound absorbing material (foamed product)>

### (Example 1)

100 parts by mass of EPDM (a base material) was masticated for 5 minutes using a mixing roll (7 inches, rotation number: 25 rpm) having a roll temperature of 40°C. Thereafter, to this EPDM, 30 parts by mass of sendust A, 80 parts by mass of calcium carbonate, 1 part by mass of zinc oxide for a filler, and 3 parts by mass of stearic acid (a processing aid) were added and then kneaded for 15 minutes. Next, 60 parts by mass of process oil (a softener) was added and then kneaded for 5 minutes. Subsequently, the roll temperature was increased to 70°C to perform warming for 3 minutes. Then, after the roll temperature was decreased to 40°C, 1 part by mass of sulfur (a cross-linking agent), a cross-linking accelerator (2 parts by mass of the thiazole and 1 part by mass of the thiuram), 10 parts by mass of azodicarbonamide (a foaming agent), and 1 part by mass of urea (a foaming auxiliary) were added and then kneaded for 10 minutes, thereby obtaining a foaming composition (a kneaded product) before foaming.

Subsequently, the aforementioned foaming composition was molded into a sheet shape having a thickness of 2 mm using a mixing roll (7 inches, rotation number: 25 rpm) having a roll temperature of 40°C, and then a 70-mm square sheet piece was cut. Five sheets of this sheet piece were superimposed, and then disposed at the center in a recessed portion of a mold having the recessed portion (recessed portion shape: 8 mm (height) × 100 mm × 100 mm). Primary foaming was performed using a pressing machine under conditions of 110°C and 45 kgf/cm² for 40 minutes, thereby obtaining a primary foamed product.

After the primary foamed product was extracted from the inside of the mold, heating was performed for 30 minutes in a hot air circulation oven set at 160°C, and thereby secondary foaming was performed to obtain a secondary foamed product. The secondary foamed product was passed three times between two rolls with a roll space being set to 20 mm to perform cell communicating, and then the slice processing was performed to shape a sheet having a thickness of 20 mm, thereby obtaining a sheet-shaped porous sound absorbing material.

### (Examples 2 to 4)

Sheet-shaped porous sound absorbing materials were obtained in the same manner as in Example 1, except that metal fillers of the types and the used amounts in Table 1 were used.

### (Example 5)

A secondary foamed product was obtained in the same manner as in Example 1, except that the metal filler was not used, and the used amount of the thiazole was changed to 2.3 parts by mass. Furthermore, a sheet-shaped porous sound absorbing material was obtained in the same manner as in Example 1, except that the slice processing was performed after cell communicating to shape a sheet having a thickness of 10 mm.

### (Example 6)

A secondary foamed product was obtained in the same manner as in Example 1, except that the metal filler was not used, and the cross-linking accelerator was changed to 2.3 parts by mass of the thiazole and 1.1 parts by mass of the thiuram. Furthermore, a sheet-shaped porous sound absorbing material was obtained in the same manner as in Example 1, except that the slice processing was performed after cell communicating to shape a sheet having a thickness of 10 mm.

### (Example 7)

A secondary foamed product was obtained in the same manner as in Example 1, except that the metal filler was not used, and the used amount of the foaming agent was changed to 15 parts by mass. Furthermore, a sheet-shaped porous sound absorbing material was obtained in the same manner as in Example 1, except that the number of times of cell communicating was changed to eight times, and the slice processing was performed to shape a sheet having a thickness of 10 mm.

### (Example 8)

A secondary foamed product was obtained in the same manner as in Example 1, except that the metal filler was not used, and the cross-linking accelerator was changed to 2.5 parts by mass of the thiazole and 1.2 parts by mass of the thiuram. Furthermore, a sheet-shaped porous sound absorbing material was obtained in the same manner as in Example 1, except that the slice processing was performed after cell communicating to shape a sheet having a thickness of 10 mm.

### (Example 9)

A secondary foamed product was obtained in the same manner as in Example 1, except that the metal filler was not used, and the used amount of the foaming agent was changed to 17 parts by mass. Furthermore, a sheet-shaped porous sound absorbing material was obtained in the same manner as in Example 1, except that the number of times of cell communicating was changed to five times, and the slice processing was performed to shape a sheet having a thickness of 20 mm.

### (Example 10)

A sheet-shaped porous sound absorbing material was obtained in the same manner as in Example 9, except that the slice processing was performed after cell communicating to shape a sheet having a thickness of 30 mm.

### (Example 11)

100 parts by mass of CR (a base material) was masticated for 5 minutes using a mixing roll (7 inches, rotation number: 25 rpm) having a roll temperature of 40°C. Thereafter, to this CR, 30 parts by mass of sendust A, 50 parts by mass of calcium carbonate, and 1 part by mass of stearic acid (a processing aid) were added and then kneaded for 5 minutes. Next, 60 parts by mass of process oil (a softener) was added and then kneaded for 5 minutes. Subsequently, the roll temperature was increased to 70°C to perform warming for 5 minutes. Then, after the roll temperature was decreased to 40°C, 5 parts by mass of zinc oxide for a cross-linking agent (a cross-linking agent), 15 parts by mass of azodicarbonamide (a foaming agent), and 1.5 parts by mass of urea (a foaming auxiliary) were added and then kneaded for 10 minutes, thereby obtaining a foaming composition (a kneaded product) before foaming.

Subsequently, the aforementioned foaming composition was molded into a sheet shape having a thickness of 2 mm using a mixing roll (7 inches, rotation number: 25 rpm) having a roll temperature of 40°C, and then a 70-mm square sheet piece was cut. Five sheets of this sheet piece were superimposed, and then disposed at the center in a recessed portion of a mold having the recessed portion (recessed portion shape: 8 mm (height) × 100 mm × 100 mm). Primary foaming was performed using a pressing machine under conditions of 110°C and 45 kgf/cm² for 40 minutes, thereby obtaining a primary foamed product.

After the primary foamed product was extracted from the inside of the mold, heating was performed for 30 minutes in a hot air circulation oven set at 160°C, and thereby secondary foaming was performed to obtain a secondary foamed product. The secondary foamed product was passed three times between two rolls with a roll space being set to 20 mm to perform cell communicating, and then the slice processing was performed to shape a sheet having a thickness of 20 mm, thereby obtaining a sheet-shaped porous sound absorbing material.

### (Example 12)

100 parts by mass of EPDM (a base material) was masticated for 5 minutes using a mixing roll (7 inches, rotation number: 25 rpm) having a roll temperature of 40°C. Thereafter, to this EPDM, 20 parts by mass of calcium carbonate, 1 part by mass of zinc oxide for a filler, and 3 parts by mass of stearic acid (a processing aid) were added and then kneaded for 15 minutes. Next, after the rotation number was changed to 40 rpm (the same rotation number also in the subsequent kneading operation), 60 parts by mass of process oil (a softener) was added and then kneaded for 20 minutes. Subsequently, the roll temperature was increased to 80°C to perform warming for 3 minutes. Then, after the roll temperature was decreased to 40°C, 1 part by mass of sulfur (a cross-linking agent), a cross-linking accelerator (2 parts by mass of the thiazole and 1 part by mass of the thiuram), 10 parts by mass of azodicarbonamide (a foaming agent), and 1 part by mass of urea (a foaming auxiliary) were added and then kneaded for 20 minutes, thereby obtaining a foaming composition (a kneaded product) before foaming.

Subsequently, the aforementioned foaming composition was molded into a sheet shape having a thickness of 2 mm using a mixing roll (7 inches, rotation number: 40 rpm) having a roll temperature of 40°C, and then a 70-mm square sheet piece was cut. Five sheets of this sheet piece were superimposed, and then disposed at the center in a recessed portion of a mold having a recessed portion (recessed portion shape: 8 mm (height) × 100 mm × 100 mm). Primary foaming was performed using a pressing machine under conditions of 110°C and 45 kgf/cm² for 60 minutes, thereby obtaining a primary foamed product.

After the primary foamed product was extracted from the inside of the mold, heating was performed for 20 minutes in a hot air circulation oven set at 160°C, and thereby secondary foaming was performed to obtain a secondary foamed product. The secondary foamed product was passed three times between two rolls with a roll space being set to 20 mm to perform cell communicating, and then the slice processing was performed to shape a sheet having a thickness of 20 mm, thereby obtaining a sheet-shaped porous sound absorbing material.

### (Examples 13 and 14)

Sheet-shaped porous sound absorbing materials were obtained in the same manner as in Example 12, except that the slice processing was performed after cell communicating to shape a sheet having a thickness in Table 2.

### (Example 15)

A sheet-shaped porous sound absorbing material was obtained in the same manner as in Example 12, except that the used amount of the foaming agent was changed to the used amount in Table 2 and cell communicating was not performed.

### (Example 16)

A sheet-shaped porous sound absorbing material was obtained in the same manner as in Example 12, except that the used amount of the foaming agent was changed to the used amount in Table 2.

### (Example 17)

A sheet-shaped porous sound absorbing material was obtained in the same manner as in Example 12, except that the used amounts of the cross-linking accelerator and the foaming agent were changed to the used amounts in Table 2.

### (Example 18)

A sheet-shaped porous sound absorbing material was obtained in the same manner as in Example 12, except that the used amounts of the cross-linking agent, the cross-linking accelerator, and the foaming agent were changed to the used amounts in Table 2.

### (Example 19)

A sheet-shaped porous sound absorbing material was obtained in the same manner as in Example 12, except that a foaming composition (a kneaded product) before foaming was obtained by the following procedure. That is, 100 parts by mass of CR (a base material) was masticated for 5 minutes using a mixing roll (7 inches, rotation number: 25 rpm) having a roll temperature of 40°C. Thereafter, to this CR, 20 parts by mass of calcium carbonate, 1 part by mass of zinc oxide for a filler, and 3 parts by mass of stearic acid (a processing aid) were added and then kneaded for 15 minutes. Next, after the rotation number was changed to 40 rpm (the same rotation number also in the subsequent kneading operation), 60 parts by mass of process oil (a softener) was added and then kneaded for 20 minutes. Subsequently, the roll temperature was increased to 80°C to perform warming for 3 minutes. Then, after the roll temperature was decreased to 40°C, 5 parts by mass of zinc oxide for a cross-linking agent (a cross-linking agent), 17 parts by mass of azodicarbonamide (a foaming agent), and 1.5 parts by mass of urea (a foaming auxiliary) were added and then kneaded for 20 minutes, thereby obtaining a foaming composition (a kneaded product) before foaming.

### (Examples 20 and 21)

Sheet-shaped porous sound absorbing materials were obtained in the same manner as in Example 19, except that the used amount of the cross-linking agent was changed to the used amount in Table 2.

### (Comparative Example 1)

A sheet-shaped porous sound absorbing material was obtained in the same manner as in Example 12, except that the used amount of the cross-linking accelerator was changed to the used amount in Table 3.

### (Comparative Example 2)

A sheet-shaped porous sound absorbing material was obtained in the same manner as in Example 12, except that the used amounts of the cross-linking accelerator and the foaming agent were changed to the used amounts in Table 3.

### (Comparative Example 3)

A sheet-shaped porous sound absorbing material was obtained in the same manner as in Example 19, except that the used amount of the foaming agent was changed to the used amount in Table 3.

### (Comparative Example 4)

A sheet-shaped porous sound absorbing material was obtained in the same manner as in Example 19, except that the used amounts of the cross-linking agent and the foaming agent were changed to the used amounts in Table 3.

### (Example 22)

100 parts by mass of LDPE (a base material), 30 parts by mass of sendust C (a metal filler), 10 parts by mass of calcium carbonate, 0.2 parts by mass of zinc oxide for a filler, 5 parts by mass of stearic acid (a processing aid), 0.7 parts by mass of dicumyl peroxide (a cross-linking agent), 10 parts by mass of azodicarbonamide (a foaming agent), and 1 part by mass of urea (a foaming auxiliary) were dry-blended to obtain a mixture, and then this mixture was melted and kneaded for 15 minutes using a kneader, thereby obtaining a foamable composition (amorphous shape) before foaming.

Subsequently, the mass of the foamable composition having the volume corresponding to 110% of the inner volume of a mold was obtained from the density and the mixing ratio of each raw material and the foamable composition was weighed, and the foamable composition was filled in a recessed portion of a mold having the recessed portion (recessed portion shape: 8 mm (height) × 100 mm × 100 mm). Primary foaming was performed using a pressing machine under conditions of 140°C and 45 kgf/cm² for 40 minutes, thereby obtaining a primary foamed product.

After the primary foamed product was extracted from the inside of the mold, heating was performed for 30 minutes in a hot air circulation oven set at 180°C, and thereby secondary foaming was performed to obtain a secondary foamed product. The secondary foamed product was passed three times between two rolls with a roll space being set to 20 mm to perform cell communicating, and then the slice processing was performed to shape a sheet having a thickness of 20 mm, thereby obtaining a sheet-shaped porous sound absorbing material.

### (Example 23)

A sheet-shaped porous sound absorbing material was obtained in the same manner as in Example 22, except that the sendust A was used as a metal filler.

### (Example 24)

A sheet-shaped porous sound absorbing material was obtained in the same manner as in Example 22, except that the sendust B was used as a metal filler.

### (Examples 25 and 26)

Sheet-shaped porous sound absorbing materials were obtained in the same manner as in Example 22, except that the sendust A was used as a metal filler and the used amount of the metal filler was changed to the used amount in Table 4.

### (Example 27)

A sheet-shaped porous sound absorbing material was obtained in the same manner as in Example 22, except that iron alloy powder was used as a metal filler.

### (Example 28)

A sheet-shaped porous sound absorbing material was obtained in the same manner as in Example 22, except that tungsten alloy powder was used as a metal filler.

### (Example 29)

100 parts by mass of LDPE (a base material), 10 parts by mass of calcium carbonate, 0.2 parts by mass of zinc oxide for a filler, 5 parts by mass of stearic acid (a processing aid), 0.7 parts by mass of dicumyl peroxide (a cross-linking agent), 2.5 parts by mass of azodicarbonamide (a foaming agent), and 1 part by mass of urea (a foaming auxiliary) were dry-blended to obtain a mixture, and then this mixture was melted and kneaded for 15 minutes using a kneader, thereby obtaining a foamable composition (amorphous shape) before foaming.

Subsequently, the mass of the foamable composition having the volume corresponding to 110% of the inner volume of a mold was obtained from the density and the mixing ratio of each raw material and the foamable composition was weighed, and the foamable composition was filled in a recessed portion of a mold having the recessed portion (recessed portion shape: 8 mm (height) × 100 mm × 100 mm). Primary foaming was performed using a pressing machine under conditions of 140°C and 45 kgf/cm² for 40 minutes, thereby obtaining a primary foamed product.

After the primary foamed product was extracted from the inside of the mold, heating was performed for 30 minutes in a hot air circulation oven set at 180°C, and thereby secondary foaming was performed to obtain a secondary foamed product. The secondary foamed product was passed three times between two rolls with a roll space being set to 20 mm to perform cell communicating, and then the slice processing was performed to shape a sheet having a thickness of 14 mm, thereby obtaining a sheet-shaped porous sound absorbing material.

### (Examples 30 to 33)

Sheet-shaped porous sound absorbing materials were obtained in the same manner as in Example 29, except that the used amount of the foaming agent was changed to the used amount in Table 5.

### (Examples 34 and 35)

Sheet-shaped porous sound absorbing materials were obtained in the same manner as in Example 30, except that the number of times of cell communicating was changed to five times, and the slice processing was performed to shape a sheet having a thickness in Table 5.

### (Comparative Examples 5 to 8)

A sheet-shaped porous sound absorbing material was obtained in the same manner as in Example 29, except that the used amounts of calcium carbonate and the foaming agent were changed to the used amounts in Table 6.

### <Evaluation of porous sound absorbing material>

Physical properties of the porous sound absorbing material (the foamed product) were evaluated by the methods described below. Results are presented in Table 1 to Table 6.

### (Expansion ratio)

The expansion ratio of the porous sound absorbing material was measured by the following procedure. Specifically, a test piece having a size of thickness: 1 cm, height: 5 cm, width: 5 cm was cut from the foamable composition before foaming, and then the mass of this test piece was measured to obtain a density before foaming. Then, the expansion ratio was calculated by dividing the aforementioned density before foaming by the below-mentioned apparent density (density after foaming) of the porous sound absorbing material.

### (Average cell size)

The average value of cell sizes of the porous sound absorbing material was measured. Specifically, an image of one cell part of the porous sound absorbing material was taken using a benchtop electron scanning microscope (JCM6000Plus NeoScope, manufactured by JEOL Ltd.), and this image was subjected to image analysis (conversion into the equivalent circle diameter) on the basis of image analysis software (Mac-View, manufactured by Mountech Co., Ltd.), thereby calculating the cell size (µm). The cell sizes of 100 cell parts of the porous sound absorbing material were obtained, and the arithmetic mean value of 100 cell sizes was obtained as the average cell size (µm).

### (Apparent density)

The apparent density of the porous sound absorbing material was measured according to "Cellular plastics-Polyethylene-Methods of test" of JIS K 6767 (1999). Specifically, after the thickness of the porous sound absorbing material was adjusted to 10 mm, a plate-shaped test piece having a height of 5 cm and a width of 5 cm was cut, and then the mass of this test piece was measured to calculate a mass per unit volume (apparent density).

### (Air permeability)

The air permeability (cm³/cm²·s) of the porous sound absorbing material was measured by the following procedure. Specifically, the air permeability of a 5-mm thick sample was measured using a Frazier type air permeability tester (FRAZIER PERMEAMETER, manufactured by Toyo Seiki Seisaku-sho, Ltd.) according to Method A in "Testing methods for woven and knitted fabrics" of JIS L 1096 (2010).

### (Thickness)

The thickness of the porous sound absorbing material was measured according to "Cellular plastics and rubbers - Determination of linear dimensions" of ISO 1923 (1981). Specifically, the thickness of the porous sound absorbing material was measured using a dial gauge having a measurement area of about 10 cm².

### <Evaluation of sound absorption coefficient>

The sound absorption coefficient was measured by the method described in "Acoustics - Determination of sound absorption coefficient and impedance in impedance tubes - Method using standing wave ratio" of JIS A 1405:1998. The sound absorption coefficients at 500 Hz and 1000 Hz were measured using a vertical incidence sound absorption coefficient measuring device equipped with a probe tube microphone (TYPE10041, manufactured by Japan Electronic Instrument Co, Ltd.). Specifically, the porous sound absorbing material was adjusted to have a diameter of 29 mm to thereby obtain a test piece, this test piece was closely attached to a backplane of a sample holder, and then measurement was performed. A higher value of the sound absorption coefficient indicates satisfactory sound absorbing characteristics, a case where the sound absorption coefficient is 0.6 or more was evaluated as "A", a case where the sound absorption coefficient is 0.4 or more and less than 0.6 was evaluated as "B", and a case where the sound absorption coefficient is less than 0.4 was evaluated as "C".

**[Table 1]**

| | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Base material | Type | EPDM | EPDM | EPDM | EPDM | EPDM | EPDM | EPDM | EPDM | EPDM | EPDM | CR |
| Metal filler | Type | Sendust A | Sendust A | Sendust B | Zinc powder | None | None | None | None | None | None | Sendust A |
| | Specific gravity | 8 | 8 | 8 | 7 | | | | | | | 8 |
| | Average particle size [µm] | 10 | 10 | 30 | 10 | | | | | | | 10 |
| | Used amount [parts by mass] | 30 | 10 | 30 | 30 | | | | | | | 30 |
| Calcium carbonate | Used amount [parts by mass] | 80 | 80 | 80 | 80 | 80 | 80 | 80 | 80 | 80 | 80 | 50 |
| Processing aid | Used amount [parts by mass] | 3 | 3 | 3 | 3 | 3 | 3 | 3 | 3 | 3 | 3 | 1 |
| Cross-linking agent | Type | Sulfur | Sulfur | Sulfur | Sulfur | Sulfur | Sulfur | Sulfur | Sulfur | Sulfur | Sulfur | Zinc oxide |
| | Used amount [parts by mass] | 1 | 1 | 1 | 1 | 1 | 1 | 1 | 1 | 1 | 1 | 5 |
| Cross-linking accelerator | Thiazole Used amount [parts by mass] | 2 | 2 | 2 | 2 | 2.3 | 2.3 | 2 | 2.5 | 2 | 2 | None |
| | Thiuram Used amount [parts by mass] | 1 | 1 | 1 | 1 | 1 | 1.1 | 1 | 1.2 | 1 | 1 | |
| Foaming agent | Used amount [parts by mass] | 10 | 10 | 10 | 10 | 10 | 10 | 15 | 10 | 17 | 17 | 15 |
| Foaming auxiliary | Used amount [parts by mass] | 1 | 1 | 1 | 1 | 1 | 1 | 1 | 1 | 1 | 1 | 1.5 |
| Compressing and communicating treatment | Number of times [times] | 3 | 3 | 3 | 3 | 3 | 3 | 8 | 3 | 5 | 5 | 3 |
| Expansion ratio | | 9 | 9 | 9 | 9 | 9 | 9 | 20 | 5 | 9 | 9 | 9 |
| Average cell size [µm] | | 400 | 400 | 400 | 400 | 100 | 600 | 400 | 400 | 400 | 400 | 400 |
| Apparent density [kg/m³] | | 80 | 80 | 80 | 80 | 80 | 80 | 40 | 140 | 80 | 80 | 80 |
| Air permeability [cm³/cm²·s] | | 2.0 | 2.0 | 2.0 | 2.0 | 0.4 | 0.4 | 1.5 | 0.5 | 2.0 | 2.0 | 2.0 |
| Thickness [mm] | | 20 | 20 | 20 | 20 | 10 | 10 | 10 | 10 | 20 | 30 | 20 |
| Sound absorption coefficient | 500 Hz | A | A | A | A | B | B | B | B | A | A | A |
| | 1000 Hz | A | A | A | A | B | B | B | B | A | B | A |

**[Table 2]**

| | | Example | | | | | | | | | |
|---|---|---|---|---|---|---|---|---|---|---|---|
| | | 12 | 13 | 14 | 15 | 16 | 17 | 18 | 19 | 20 | 21 |
| Base material | Type | EPDM | EPDM | EPDM | EPDM | EPDM | EPDM | EPDM | CR | CR | CR |
| Metal filler | Type | None | None | None | None | None | None | None | None | None | None |
| Calcium carbonate | Used amount [parts by mass] | 20 | 20 | 20 | 20 | 20 | 20 | 20 | 20 | 20 | 20 |
| Processing aid | Used amount [parts by mass] | 3 | 3 | 3 | 3 | 3 | 3 | 3 | 3 | 3 | 3 |
| Cross-linking agent | Type | Sulfur | Sulfur | Sulfur | Sulfur | Sulfur | Sulfur | Sulfur | Zinc oxide | Zinc oxide | Zinc oxide |
| | Used amount [parts by mass] | 1 | 1 | 1 | 1 | 1 | 1 | 1.5 | 5 | 3.5 | 2 |
| Cross-linking accelerator | Thiazole Used amount [parts by mass] | 2 | 2 | 2 | 2 | 2 | 2.5 | 2.5 | None | None | None |
| | Thiuram Used amount [parts by mass] | 1 | 1 | 1 | 1 | 1 | 1.5 | 1.5 | | | |
| Foaming agent | Used amount [parts by mass] | 10 | 10 | 10 | 12 | 12 | 12 | 12 | 17 | 17 | 17 |
| Foaming auxiliary | Used amount [parts by mass] | 1 | 1 | 1 | 1 | 1 | 1 | 1 | 1.5 | 1.5 | 1.5 |
| Compressing and communicating treatment | Number of times [times] | 3 | 3 | 3 | 0 | 3 | 3 | 3 | 3 | 3 | 3 |
| Expansion ratio | | 9 | 9 | 9 | 5 | 5 | 9 | 2 | 2 | 2 | 5 |
| Average cell size [µm] | | 300 | 300 | 300 | 300 | 600 | 100 | 100 | 100 | 300 | 600 |
| Apparent density [kg/m³] | | 80 | 80 | 80 | 80 | 40 | 100 | 140 | 140 | 100 | 100 |
| Air permeability [cm³/cm²·s] | | 0.5 | 0.5 | 0.5 | 0.1 | 2.0 | 0.5 | 0.1 | 0.1 | 0.5 | 1.0 |
| Thickness [mm] | | 20 | 10 | 30 | 20 | 20 | 20 | 20 | 20 | 20 | 20 |
| Sound absorption coefficient | 500 Hz | A | B | B | B | B | B | B | B | B | B |
| | 1000 Hz | A | B | B | B | B | B | B | B | B | B |

**[Table 3]**

| | | Comparative Example | | | |
|---|---|---|---|---|---|
| | | 1 | 2 | 3 | 4 |
| Base material | Type | EPDM | EPDM | CR | CR |
| Metal filler | Type | None | None | None | None |
| Calcium carbonate | Used amount [parts by mass] | 20 | 20 | 20 | 20 |
| Processing aid | Used amount [parts by mass] | 3 | 3 | 3 | 3 |
| Cross-linking agent | Type | Sulfur | Sulfur | Zinc oxide | Zinc oxide |
| | Used amount [parts by mass] | 1 | 1 | 5 | 2 |
| Cross-linking accelerator | Thiazole Used amount [parts by mass] | 3 | 1.5 | None | None |
| | Thiuram Used amount [parts by mass] | 1.5 | 1 | | |
| Foaming agent | Used amount [parts by mass] | 10 | 15 | 12 | 22 |
| Foaming auxiliary | Used amount [parts by mass] | 1 | 1 | 1.5 | 1.5 |
| Compressing and communicating treatment | Number of times [times] | 3 | 3 | 3 | 3 |
| Expansion ratio | | 12 | 4 | 2 | 6 |
| Average cell size [µm] | | 70 | 800 | 80 | 700 |
| Apparent density [kg/m³] | | 120 | 30 | 150 | 80 |
| Air permeability [cm³/cm²·s] | | 0.4 | 2.0 | 0.1 | 1.5 |
| Thickness [mm] | | 20 | 20 | 20 | 20 |
| Sound absorption coefficient | 500 Hz | C | C | C | C |
| | 1000 Hz | C | C | C | C |

**[Table 4]**

| | | Example | | | | | | |
|---|---|---|---|---|---|---|---|---|
| | | 22 | 23 | 24 | 25 | 26 | 27 | 28 |
| Base material | Type | LDPE | LDPE | LDPE | LDPE | LDPE | LDPE | LDPE |
| Metal filler | Type | Sendust C | Sendust A | Sendust B | Sendust A | Sendust A | Fe alloy powder | W alloy powder |
| | Specific gravity | 8 | 8 | 8 | 8 | 8 | 4 | 10 |
| | Average particle size [µm] | 5 | 10 | 30 | 10 | 10 | 10 | 10 |
| | Used amount [parts by mass] | 30 | 30 | 30 | 5 | 50 | 30 | 30 |
| Calcium carbonate | Used amount [parts by mass] | 10 | 10 | 10 | 10 | 10 | 10 | 10 |
| Foaming agent | Used amount [parts by mass] | 10 | 10 | 10 | 10 | 10 | 10 | 10 |
| Compressing and communicating treatment | Number of times [times] | 3 | 3 | 3 | 3 | 3 | 3 | 3 |
| Expansion ratio | | 9 | 9 | 9 | 9 | 9 | 9 | 9 |
| Average cell size [µm] | | 400 | 400 | 400 | 400 | 400 | 400 | 400 |
| Apparent density [kg/m³] | | 80 | 80 | 80 | 80 | 80 | 80 | 80 |
| Air permeability [cm³/cm²·s] | | 2.0 | 2.0 | 2.0 | 2.0 | 2.0 | 2.0 | 2.0 |
| Thickness [mm] | | 20 | 20 | 20 | 20 | 20 | 20 | 20 |
| Sound absorption coefficient | 500 Hz | B | B | B | B | B | B | A |
| | 1000 Hz | A | A | A | A | A | A | A |

**[Table 5]**

| | | Example | | | | | | |
|---|---|---|---|---|---|---|---|---|
| | | 29 | 30 | 31 | 32 | 33 | 34 | 35 |
| Base material | Type | LDPE | LDPE | LDPE | LDPE | LDPE | LDPE | LDPE |
| Metal filler | Type | None | None | None | None | None | None | None |
| Calcium carbonate | Used amount [parts by mass] | 10 | 10 | 10 | 10 | 10 | 10 | 10 |
| Foaming agent | Used amount [parts by mass] | 2.5 | 2.7 | 3 | 10 | 1.7 | 2.7 | 2.7 |
| Compressing and communicating treatment | Number of times [times] | 3 | 3 | 3 | 3 | 3 | 5 | 5 |
| Expansion ratio | | 9 | 9 | 9 | 21 | 6 | 9 | 9 |
| Average cell size [µm] | | 100 | 400 | 600 | 400 | 400 | 400 | 400 |
| Apparent density [kg/m³] | | 80 | 80 | 80 | 80 | 80 | 80 | 80 |
| Air permeability [cm³/cm²·s] | | 0.4 | 0.4 | 0.4 | 0.4 | 0.4 | 2.0 | 2.0 |
| Thickness [mm] | | 14 | 14 | 14 | 14 | 14 | 15 | 40 |
| Sound absorption coefficient | 500 Hz | B | B | B | B | B | B | A |
| | 1000 Hz | B | B | B | B | B | A | B |

**[Table 6]**

| | | Comparative Example | | | |
|---|---|---|---|---|---|
| | | 5 | 6 | 7 | 8 |
| Base material | Type | LDPE | LDPE | LDPE | LDPE |
| Metal filler | Type | None | None | None | None |
| Calcium carbonate | Used amount [parts by mass] | 20 | 20 | 20 | 20 |
| Foaming agent | Used amount [parts by mass] | 1.3 | 3 | 3.5 | 1.5 |
| Compressing and communicating treatment | Number of times [times] | 3 | 3 | 3 | 3 |
| Expansion ratio | | 9 | 9 | 9 | 5 |
| Average cell size [µm] | | 90 | 700 | 400 | 400 |
| Apparent density [kg/m³] | | 80 | 80 | 30 | 150 |
| Air permeability [cm³/cm²·s] | | 2 | 2 | 2 | 2 |
| Thickness [mm] | | 14 | 14 | 14 | 14 |
| Sound absorption coefficient | 500 Hz | C | C | C | C |
| | 1000 Hz | C | C | C | C |

From the above results, it is confirmed that, by using a porous sound absorbing material having a specific average cell size and a specific apparent density, excellent sound-absorption characteristics in a low-frequency region can be obtained.

## Claims

1. A porous sound absorbing material having an average cell size of 100 to 600 µm and an apparent density of 40 to 140 kg/m³.

2. The porous sound absorbing material according to claim 1, wherein an air permeability is 0.1 to 40 cm³/cm²·s.

3. The porous sound absorbing material according to claim 1 or 2, wherein the porous sound absorbing material has a sheet shape having a thickness of 15 to 40 mm.

4. The porous sound absorbing material according to any one of claims 1 to 3, wherein the porous sound absorbing material comprises at least one base material selected from the group consisting of a resin material and an elastomer, and a metal filler,
a content of the metal filler is 5 to 50 parts by mass with respect to 100 parts by mass of the base material,
a specific gravity of the metal filler is 4 to 10, and
an average particle size of the metal filler is 5 to 30 µm.

5. A sound absorption method of absorbing sound using the porous sound absorbing material according to any one of claims 1 to 4.

6. The sound absorption method according to claim 5, wherein sound at 1000 Hz or less is absorbed.

7. A method for producing the porous sound absorbing material according to any one of claims 1 to 4, the method comprising:
foaming a foamable composition comprising at least one selected from the group consisting of a resin material and an elastomer, and a foaming agent to obtain a foamed product, and then compressing the foamed product to communicate part or all of closed cells included in the foamed product, thereby obtaining open cells.
